# FASCICULE DE BREVET EUROPEEN

(11) **EP 0 318 349 B1**
(45) Date de publication et mention de la délivrance du brevet: **14.04.1993**
(21) Numéro de dépôt: 88402815.0
(22) Date de dépôt: 09.11.1988
(51) Int. Cl.: F16J 15/32

(54) **Dispositif d'étanchéité de l'arbre d'une machine tournante**
Dichtungseinrichtung für die Welle einer drehenden Maschine
Sealing device for the shaft of a rotating machine

(30) Priorité: 23.11.1987 FR 8716179
(43) Date de publication de la demande: 31.05.1989
(73) Titulaire: KSB S.A., 92400 Courbevoie (FR)
(72) Inventeur: Chadaineau, Joel, F-36000 Chateauroux (FR); Degay, Michel, F-36000 Chateauroux (FR)
(74) Mandataire: Bourgognon, Jean-Marie

(56) Documents cités:
- FR-A- 2 358 591
- US-A- 2 692 152
- US-A- 4 421 329

## Description

La présente invention se rapporte aux dispositifs destinés à assurer l'étanchéité d'arbres de machines tournantes du type indiqué au préambule de la revendication 1.

Outre les garnitures mécaniques, pratiquement étanches mais qui sont coûteuses, qui doivent être adaptées en fonction des pressions, des vitesses périphériques et des liquides pompés et dont le remplacement nécessite un démontage complet du dispositif d'étanchéité, on dispose actuellement, pour assurer l'étanchéité de l'arbre tournant d'une pompe, de garnitures à tresse. Elles se composent d'un empilage de plusieurs anneaux de tresse de section différente. Pour permettre une certaine lubrification, elles laissent passer un léger débit de fuite. Il faut les conformer et les imprégner au moment de leur mise en place, travail fastidieux et salissant. En outre, elles se dégradent assez vite. Leur remplacement implique à nouveau ces mêmes travaux.

US-A-4 421 329 décrit un joint à lèvres en deux pièces, destiné à être monté dans un canal circulaire entourant un arbre tournant.

US-A-2 692 152 décrit un dispositif d'étanchéité pour l'arbre d'une machine tournante, comprenant un porte-garniture fixé au bâti de la machine et définissant un logement de garniture débouchant radialement sur l'arbre et axialement d'un côté de l'arbre, et un presse étoupe monté sur le bâti et susceptible de repousser axialement une garniture logée dans le logement et fendue, dont les faces d'extrémité en regard le long de la fente peuvent être accolées et de la face latérale intérieure de laquelle sont issues des lèvres radiales continues.

L'invention pallie les inconvénients des dispositifs antérieurs par un dispositif incorporant une garniture d'étanchéité bien plus simple à fabriquer et à monter et dont les performances d'étanchéité sont cependant supérieures à celles des garnitures à tresse du point de vue des fuites et à toutes les garnitures du point de vue de la longévité.

Le dispositif suivant l'invention a les caractéristiques définies à la revendication 1.

Suivant un mode de réalisation, l'élément annulaire est d'une pièce et est en une matière susceptible de reprendre la forme annulaire initiale après que les deux faces d'extrémité en regard ont été écartées l'une de l'autre d'une distance supérieure au diamétre intérieur de l'élément annulaire. Suivant un autre mode de réalisation, l'élément annulaire est constitué de deux parties annulaires, de préférence identiques, dont les faces d'extrémité peuvent être accolées simultanément deux à deux.

Le montage est facilité, puisqu'il suffit, quand la garniture d'étanchéité est d'une pièce, de la déformer temporairement en en écartant les faces d'extrémité pour la passer autour de l'arbre ou pour l'en enlever, sans avoir à démonter tout le dispositif d'étanchéité et, quand elle est en deux parties, de les appliquer autour de l'arbre indépendamment l'une de l'autre et de les accoler, toujours sans avoir à démonter l'ensemble. La fabrication s'effectue en usine dans des moules et ne nécessite pas de confection d'une tresse sur place. D'une manière inattendue, cette garniture d'étanchéité fendue, ce qui semble aller à l'encontre de l'étanchéité visée en créant un chemin de fuite, s'avére avoir moins de fuite qu'une garniture à tresse.

En prévoyant deux lèvres radiales, on définit entre elles une chambre à lubrifiant. La graisse lubrifiante de type Molydal 3669 ou 3790 assure, pendant toute la phase d'amorçage de la pompe, la lubrification des lèvres et donc leur refroidissement, ce qui évite toute dégradation de celles-ci pendant que le liquide véhiculé n'est pas en contact avec la garniture d'étanchéité. Pour que chaque lèvre résiste mieux à la pression, celui de ses flancs tourné vers le côté du liquide sous pression qu'il faut empêcher de passer, est plus incliné que l'autre par rapport à l'axe de l'élément annulaire. Ces lèvres qui sont dans des plans perpendiculaires à l'axe de l'arbre viennent en contact linéaire avec l'arbre, assurent une meilleure étanchéité que des garnitures à contact superficiel et ont moins tendance à s'échapper de l'arbre en étant recourbées. Par souci de simplifier le montage par une garniture symétrique, les deux flancs des deux lèvres qui sont les plus éloignés l'un de l'autre sont plus inclinés que les deux autres flancs. La seconde lèvre empêche les poussières de pénétrer. Pour assurer un contact large et donc efficace des lèvres avec l'arbre, il vaut mieux que les extrémités des lèvres soient arrondies. On préfère aussi, pour empêcher toute fuite par l'extérieur de la garniture entre celle-ci et le bâti, prévoir un bourrelet continu issu de la face latérale extérieure de l'élément annulaire. On constate que la fuite est moindre quand les faces d'extrémité font un angle avec un plan passant par l'axe de l'élément annulaire et par le côté intérieur d'une face d'extrémité.

De préférence la garniture est en matière plastique, notamment en polyuréthane, par exemple en Elastollan 1185A fourni par Basf.

Au dessin annexé, donné uniquement à titre d'exemple:
- les figures 1 et 2 sont des vues en perspective de deux modes de réalisation d'une garniture d'étanchéité incorporée au dispositif suivant l'invention;
- la figure 3 est une vue en coupe transversale de ces deux garnitures d'étanchéité; et
- la figure 4 est une vue en coupe axiale d'un dispositif d'étanchéité d'un arbre d'une machine tournante incorporant une garniture d'étanchéité.

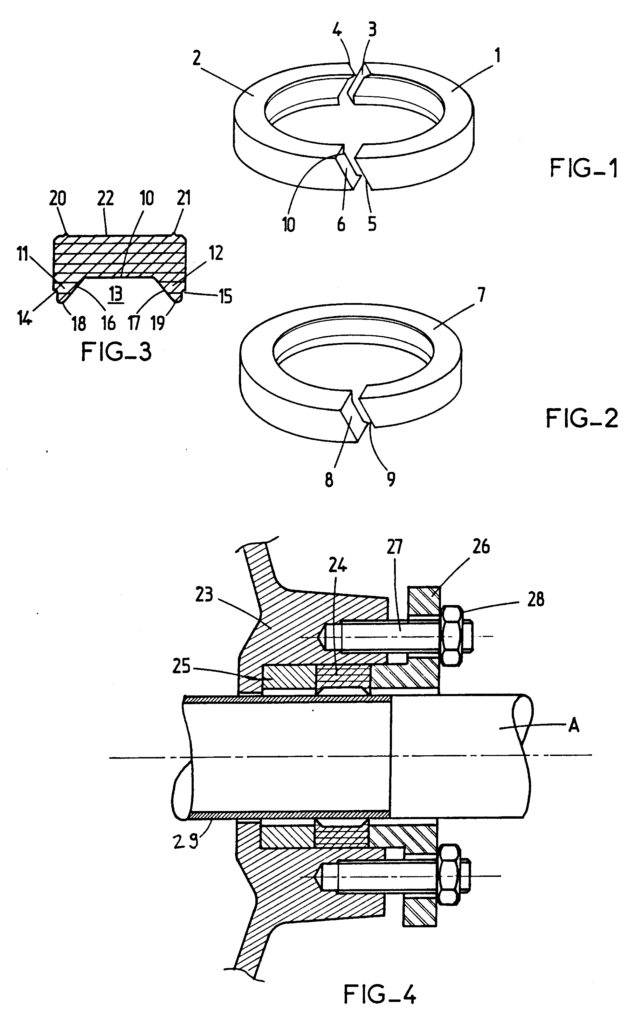

La garniture d'étanchéité représentée à la figure 1 comprend un élément annulaire constitué de deux parties annulaires 1, 2. La face d'extrémité 3 de la partie annulaire 1 peut être accolée à la face d'extrémité 4 de la partie annulaire 2. La face d'extrémité 5 de la partie annulaire 1 peut être accolée dans le même temps à la face d'extrémité 6 de la partie annulaire 2.

La garniture d'étanchéité de la figure 2 comprend un élément annulaire 7 en un polyuréthane élastomère thermoplastique, dit Elastollan 1185A (Basf), susceptible de reprendre la forme annulaire sous laquelle il est représenté, après que les deux faces d'extrémité 8 et 9 ont été écartées l'une de l'autre d'une distance supérieure au diamètre intérieur de l'élément annulaire 7.

Dans les deux cas, les faces d'extrémité font un angle avec un plan passant par l'axe d'élément annulaire 1, 7, et par le côté intérieur 10 d'une face d'extrémité 6.

On voit, à la figure 3, que de la face latérale 10 intérieure de l'élément annulaire sont issues deux lèvres 11, 12 radiales continues, définissant entre elles une chambre à lubrifiant pouvant être remplie de suif ou de graisse. Les flancs 14 et 15 des deux lèvres 11 et 12, qui sont les plus éloignés l'un de l'autre, sont plus inclinés que les deux autres flancs 16, 17. Les extrémités des lèvres 11, 12 s'étendent dans des plans perpendiculaires à l'axe de l'arbre (A) et sont arrondies en 18, 19. Deux bourrelets continus 20, 21 sont issus de la face latérale 22 extérieure de l'élément annulaire.

Le dispositif d'étanchéité représenté à la figure 4 comprend un porte-garniture 23 fixé à un bâti et définissant un logement pour une garniture 24 destinée à venir autour de l'arbre A d'une machine tournante munie d'une chemise 29 en acier inoxydable. Dans le logement de garniture sont enfilées successivement une entretoise 25 et la garniture d'étanchéité 24. Celle-ci peut être maintenue en place dans le logement par un presse-étoupe 26, au moyen d'un boulon 27 vissé dans le porte-garniture 23 et d'un écrou 28.

L'expérience révèle que, dans ces conditions, la garniture 24 a une tenue exceptionnelle à l'eau sableuse et a une durée de vie multipliée par quatre par rapport à une tresse, et par deux par rapport à une garniture mécanique, dans des conditions identiques de fonctionnement. Elle tient à des vitesses périphériques de 10 m/seconde et sous des pressions de fonctionnement de 25 bars. Une légère fuite permettant la lubrification est de l'ordre de 3 litres/heure en moyenne, ce qui est inférieur à la fuite d'une tresse. Le montage d'une seule garniture suffit à obtenir l'étanchéité, quelle que soit la pression d'utilisation.

Pour changer la garniture 24, il suffit de desserrer le presse-étoupe 26, de faire coulisser la garniture 24 le long de l'arbre, en dehors du porte-garniture 23, et, quand la garniture est du type suivant la figure 2, de la sortir de l'arbre en écartant ses faces 8 et 9 et d'en remettre une neuve en écartant les faces 8 et 9 de façon que leur distance soit supérieure à celle du rayon de l'arbre A, et, quand la garniture est du type représenté à la figure 1, de désaccoler les parties 1 et 2 et de les remplacer par des nouvelles. On fait à nouveau coulisser la nouvelle garniture pour la mettre dans le porte-garniture 25 et l'on resserre le presse-étoupe 26.

Ainsi, le dispositif suivant l'invention permet de rendre étanche, vis-à-vis d'un liquide sous grande pression, un arbre ayant une grande vitesse de rotation, la garniture pouvant être changée sur le site sans avoir à démonter toute la machine.

## Revendications

1. Dispositif d'étanchéité pour l'arbre d'une machine tournante, comprenant un porte-garniture (23) fixé au bâti de la machine et définissant un logement de garniture débouchant radialement sur l'arbre (A) et axialement d'un côté de l'arbre, et un presse-étoupe (26) monté sur le bâti et susceptible de repousser axialement une garniture (24) d'étanchéité logée dans le logement et fendue, dont les faces d'extrémité (3, 4, 5, 6, 8, 9) en regard le long de la fente peuvent être accolées et de la face latérale intérieure (10) de laquelle sont issues des lèvres (11,12) radiales continues, caractérisé en ce que la garniture d'étanchéité est constituée d'un élément annulaire (1,2,7) unique fendu, dont chacun des deux flancs axiaux est disposé dans un plan perpendiculaire à l'axe de l'arbre (A), lesdits flancs axiaux venant, en position montée, en contact avec des surfaces du logement et du presse-étoupe (26), et en ce que l'élément annulaire (1,2,7) présente deux lèvres radiales continues (11,12) qui sont agencées de manière à définir axialement entre elles et l'arbre une chambre (13) à lubrifiant et qui sont disposées à l'intérieur de l'espace délimité par lesdits plans des flancs axiaux.

2. Dispositif suivant la revendication 1, caractérisé en ce que les flancs de chaque lèvre (11,12) sont inclinés par rapport à un plan perpendiculaire à l'axe de l'arbre (A) et en ce que l'un des flancs (14,15) de chaque lèvre (11,12) est plus incliné que l'autre (16,17) par rapport à ce plan.

3. Dispositif suivant la revendication 2, caractérisé en ce que les deux flancs (14,15) des deux lèvres (11,12), qui sont axialement les plus éloignés l'un de l'autre, sont plus inclinés que les deux autres flancs (16,17), par rapport au dit plan.

4. Dispositif suivant l'une des revendications 1 à 3, caractérisé en ce que les extrémités des lèvres sont arrondies (18,19).

5. Dispositif suivant l'une des revendications 1 à 4, caractérisé par un bourrelet (20,21) continu issu de la face latérale extérieure (22) de l'élément annulaire.

6. Dispositif suivant l'une des revendications 1 à 5, caractérisé en ce que les faces d'extrémité (3,4,5,6) de l'élément annulaire (1,2,7) provenant de la fente font un angle avec un plan passant par l'axe de l'élément annulaire et par le côté intérieur d'une face d'extrémité (3,4,5,6).

7. Dispositif suivant l'une des revendications 1 à 6, caractérisé en ce que l'élément annulaire unique (7) est en une matière susceptible de reprendre la forme annulaire initiale fermée après que les deux faces d'extrémité (8,9) en regard ont été écartées l'une de l'autre d'une distance supérieure au diamètre intérieur de l'élément annulaire.

8. Dispositif suivant l'une des revendications 1 à 7, caractérisé en ce que l'élément annulaire unique est fendu deux fois, les deux parties de l'élément annulaire (1,2) étant de préférence identiques et présentant des faces d'extrémité (3,4,5,6) qui peuvent être accolées respectivement et simultanément deux à deux.

## Claims

1. Sealing device for the shaft of a rotating machine, comprising a packing carrier (23) attached to the frame of the machine and defining a packing housing opening radially on to the shaft (A) and axially at one side of the shaft, and a stuffing box (26) mounted on the frame and capable of forcing back axially a split sealing ring (24) accommodated in the housing, the opposite end surfaces (3, 4, 5, 6, 8, 9) of which sealing ring can be joined side by side along the split, and from the internal lateral surface (10) of which there emerge continuous radial lips (11, 12), characterised in that the sealing ring is formed by a single, split annular element (1, 2, 7), each of the two axial flanks of which is arranged in a plane perpendicular to the axis of the shaft (A), the said axial flanks, in the mounted position, coming into contact with surfaces of the housing and of the stuffing box (26), and in that the annular element (1, 2, 7) has two continuous radial lips (11, 12) which are arranged so as to define axially between them and the shaft a lubricant chamber (13) and which are arranged inside the space delimited by the said planes of the axial flanks.

2. Device according to claim 1, characterised in that the flanks of each lip (11, 12) are inclined relative to a plane perpendicular to the axis of the shaft (A) and in that one of the flanks (14, 15) of each lip (11, 12) is inclined more than the other (16, 17) relative to this plane.

3. Device according to claim 2, characterised in that the two flanks (14, 15) of the two lips (11, 12) which are axially the furthest apart from each other, are inclined more than the other two flanks (16, 17) relative to the said plane.

4. Device according to one of claims 1 to 3, characterised in that the ends of the lips are rounded (18, 19).

5. Device according to one of claims 1 to 4, characterised by a continuous rim (20, 21) emerging from the external lateral surface (22) of the annular element.

6. Device according to one of claims 1 to 5, characterised in that the end surfaces (3, 4, 5, 6) of the annular element (1, 2, 7) resulting from the split form an angle with a plane passing through the axis of the annular element and through the inner side of an end surface (3, 4, 5, 6).

7. Device according to one of claims 1 to 6, characterised in that the single annular element (7) is made of a material capable of returning to the initial closed annular shape after the two opposite end surfaces (8, 9) have been separated from each other by a distance greater than the internal diameter of the annular element.

8. Device according to one of claims 1 to 7, characterised in that the single annular element is split twice; the two parts of the annular element (1, 2) being preferably identical and having end surfaces (3, 4, 5, 6) which can be joined side by side respectively and simultaneously in pairs.

## Patentansprüche

1. Dichtungseinrichtung für die Welle einer drehenden Maschine, die ein Lagerteil (23) umfaßt, das am Maschinengehäuse befestigt ist und einen Sitz für eine Dichtungsanordnung bildet, der sich radial auf der Welle (A) und an der Seite der Welle in Axialrichtung erstreckt, und eine Stopfbüchse (26), die an dem Gehäuse montiert und geeignet ist, eine Dichtung (24) in axialer Richtung zurückzudrängen, die in dem Sitz untergebracht und geschlitzt ist, wobei die einander gegenüberliegenden Endflächen (3, 4, 5, 6, 8, 9), des Schlitzes zusammengefügt werden können, und wobei von der seitlichen Innenfläche (10) der Dichtung radiale, kontinuierlich umlaufende Lippen (11, 12) hervorstehen, dadurch gekennzeichnet, daß die Dichtung gebildet ist durch ein einziges, geschlitztes ringförmiges Element (1, 2, 7), von dem jede der zwei axialen Flanken in einer Ebene angeordnet ist die senkrecht zur Achse der Welle (A) ist, wobei diese axialen Flanken, in der montierten Position, in Kontakt mit den Oberflächen des Sitzes und der Stopfbüchse (26) kommen, und daß das ringförmige Element (1, 2, 7) zwei radiale, kontinuierlich umlaufende Lippen (11, 12) aufweist, die so angeordnet sind, daß sie in Axialrichtung zwischen sich und der Welle eine Schmiermittelkammer (13) bilden und auf der Innenseite des Zwischenraums angeordnet sind, der durch die Ebenen der axialen Flanken begrenzt ist.

2. Vorrichtung nach Anspruch 1, dadurch gekennzeichnet, daß die Flanken jeder Lippe (11, 12) geneigt sind im Verhältnis zu einer Ebene, die senkrecht zur Achse der Welle (A) ist, und daß die einen Flanken (14, 15) jeder Lippe (11, 12) mehr geneigt sind als die anderen (16, 17) im, Verhältnis zu dieser Ebene.

3. Vorrichtung nach Anspruch 2, dadurch gekennzeichnet, daß die zwei Flanken (14, 15) der zwei Lippen (11, 12), die in Axialrichtung mehr voneinander entfernt sind, stärker geneigt sind als die zwei anderen Flanken (16, 17) im Verhältnis zu der besagten Ebene.

4. Vorrichtung nach einem der Ansprüche 1 bis 3, dadurch gekennzeichnet, daß die äußeren Enden (18, 19) der Lippen abgerundet sind.

5. Vorrichtung nach einem der Ansprüche 1 bis 4, gekennzeichnet durch einen kontinuierlich umlaufenden Wulst (20, 21), der von der äußeren seitlichen Fläche (22) des ringförmigen Elementes hervorsteht.

6. Vorrichtung nach einem der Ansprüche 1 bis 5, dadurch gekennzeichnet, daß die Endflächen (3, 4, 5, 6) des ringförmigen Elements (1, 2, 7), die von dem Schlitz herrühren, einen Winkel bilden mit einer Ebene, die durch die Achse des ringförmigen Elementes und durch die Innenseite einer Endfläche (3, 4, 5, 6) verläuft.

7. Vorrichtung nach einem der Ansprüche 1 bis 6, dadurch gekennzeichnet, daß das ringförmige Element (7) aus einem Material besteht, das geeignet ist, die anfängliche ringförmige Gestalt wieder anzunehmen, nachdem die zwei gegenüberliegenden Endlächen (8, 9) voneinander um einen Abstand entfernt worden sind, der größer ist als der Innendurchmesser des ringförmigen Elements.

8. Vorrichtung nach einem der Ansprüche 1 bis 7, dadurch gekennzeichnet, daß das einzige ringförmige Element zweimal geschlitzt ist, wobei die vorzugsweisen gleichen Teile des ringförmigen Elements (1, 2) Endflächen (3, 4, 5, 6) aufweisen, die jeweils gleichzeitig zu zweien zusammengefügt werden können.
